# EUROPÄISCHE PATENTSCHRIFT

(11) **EP 1 987 072 B1**
(45) Veröffentlichungstag und Bekanntmachung des Hinweises auf die Patenterteilung: **13.09.2017**
(21) Anmeldenummer: 07711705.9
(22) Anmeldetag: 22.02.2007
(51) Int. Cl.: C08G 12/30, C08G 12/32

(54) **NEUE MELAMIN-FORMALDEHYD-KONDENSATIONSPRODUKTE MIT THERMOPLASTISCHEN EIGENSCHAFTEN**
NOVEL MELAMINE-FORMALDEHYDE CONDENSATES WITH THERMOPLASTIC PROPERTIES
NOUVEAU PRODUIT DE CONDENSATION MELAMINE-FORMALDEHYDE PRESENTANT DES PROPRIETES THERMOPLASTIQUES

(30) Priorität: 23.02.2006 EP 06075451; 09.06.2006 DE 102006027760
(43) Veröffentlichungstag der Anmeldung: 05.11.2008
(73) Patentinhaber: Borealis Agrolinz Melamine GmbH, 4020 Linz (AT)
(72) Erfinder: PUCHINGER, Helmut, 4240 Freistadt (AT); ENDESFELDER, Andreas, 4021 Linz (AT); BURGER, Martin, 84032 Altdorf (DE); SCHWARZINGER, Clemens, 4600 Wels (AT); LEIDL, Manuela, 5280 Braunau (AT); HUBER, Werner, 5232 Kirchberg (AT); SCHMIDT, Harald, 4040 Linz (AT)
(74) Vertreter: Maikowski & Ninnemann Patentanwälte Partnerschaft mbB
(86) Internationale Anmeldenummer: PCT/EP2007/001692
(87) Internationale Veröffentlichungsnummer: WO 2007/096200

(56) Entgegenhaltungen:
- EP-A- 1 416 005
- WO-A-96/34133
- WO-A-03/046053
- DE-B- 1 103 582
- DE-C- 905 850
- WICKS ZENO W JR ET AL: "MODEL COMPOUND FOR MELAMINE FORMALDEHYDE RESINS" J COAT TECHNOL JUL 1983, Bd. 55, Nr. 702, Juli 1983 (1983-07), Seiten 29-34, XP009083542

## Beschreibung

Die Erfindung betrifft neue Melamin-Formaldehyd-Kondensationsprodukte mit thermoplastischen Eigenschaften nach Anspruch 1, ein Verfahren zur Herstellung derselben nach Anspruch 10, und deren Verwendung nach Anspruch 14 und 15.

Melamin-Formaldehyd-Harze werden hauptsächlich in der Holzindustrie als Bindemittel in Sperrholzplatten, in Laminaten, als Vernetzungsmittel in Lacken und als Verbundmaterial für Pressmassen verwendet. Diese herkömmlichen Harze sind hochvernetzte und deshalb steife und harte duroplastische Materialien. Die Vernetzung erfolgt in der Regel bereits bei tiefen Temperaturen, so dass die Materialien nicht ohne Vernetzung aufgeschmolzen werden können und deshalb keine thermoplastische Verarbeitbarkeit gegeben ist.

In der Vergangenheit wurden verschiedene Ansätze gewählt, um die thermoplastische Verarbeitbarkeit von Aminoplasten wie Melamin-Formaldehydharzen zu verbessern.

Ein Ansatz besteht in der Umetherung von bereits veretherten Melaminharzen (WO 03/106558). Dabei werden zunächst Melamin-Aldehyd-Vorkondensate mit niedermolekularen Alkoholen verethert und anschließend mit höhermolekularen Alkoholen umgeethert. Die derart hergestellten, vernetzten Harze weisen ein gutes Schmelzverhalten auf, das heißt, zwischen ihrer Schmelztemperatur und der beginnenden Aushärtungstemperatur besteht ein ausreichend großes Verarbeitungsfenster.

Nachteilig bei den bekannten veretherten Melaminharzen ist, dass sie stark vernetzt sind und deshalb auch in der Schmelze eine verhältnismäßig hohe Viskosität aufweisen. Beim Einarbeiten von Füllstoffen erhöht sich die Viskosität weiter, so dass eine homogene Verteilung der Füllstoffe im Harz kaum möglich ist. Des Weiteren bedingt die hohe Viskosität ein schlechtes Fließverhalten der Harzschmelze im Verarbeitungswerkzeug.

Einen anderen Ansatz zur Erhöhung der Flexibilität von Melaminharz-Formmassen beschreibt die WO 2005/010097. Ein vernetzter Melaminharzether wird hier mit einem vernetzten Thermoplast gemischt. Vernetzte Thermoplaste, wie ein Ethylen-Vinylacetat-Copolymer oder ein Ethylen-Acrylsäureester-Copolymer, wirken als Gleitmittel und verbessern so das Fließverhalten der Formmassen. Nachteilig dabei ist, dass sich durch den Zusatz von Thermoplasten die mechanischen Eigenschaften der Formmassen verschlechtern.

Ein weiterer Ansatz der Veränderung der Eigenschaften von Melaminharzen besteht zum Beispiel darin, die Kondensationsrektion mit bereits modifizierten Melaminderivaten durchzuführen. So ist bereits der Einsatz von N-alkylierten Melaminderivaten zur Herstellung der Polymerprodukte und deren Kondensationsprodukte mit Formaldehyd bekannt.

In den US-Anmeldungen 2005/0282994 und 2005/0014869 werden N-Alkylmelamin-Formaldehyd-Zusammensetzungen beschrieben, die als Vernetzer in Lacksystemen eingesetzt werden. Insbesondere werden Di- und Trialkylmelamine bzw. deren Mischungen beschreiben sowie deren Vernetzung mit Carbamaten bzw. Verbindungen, die aktiven Wasserstoff enthalten.

WO 03/046053 A1 beschreibt Polymere, die nach einem Mehrstufen-Verfahren hergestellt werde. Dabei werden Vorkondensate aus C1-C8- Aldehyden mit Triazin-Derivaten umgesetzt und anschließend mit C1-C4- Alkoholen verethert werden. Gegebenenfalls erfolgt anschließend eine Umetherung mit C4-C8- Alkoholen. Die so erhaltenen Polymere sind durch eine Substitution der Triazinaminogruppen ausschließlich durch Ethergruppen oder Hydroxyalkyle (NH-CHR₃-O-R₄ oder N-(CHR₃-O-R₄)₂) gekennzeichnet.

EP 1 416 005 A1 beschreibt die Umsetzung von C1-C8-Aldehyden mit einem Triazin- Derivat der Struktur (I) oder (II) unter Ausbildung von Aminotriazin-Copolymeren. Die verwendeten Triazinen Derivate weisen mit durch Hydroxyalkylen und Methoxymethylgruppen substituierten Amingruppen auf.

DE 905 850 beschreibt ein Verfahren zur Herstellung von N- Substitutionsprodukten des Melamins ausgehend von Dicyanamid und primären oder sekundären Aminen. So wird im Beispiel 1 die Umsetzung von Dicyanamid mit Dimethylamin beschrieben, wobei es unter anderem zur Bildung von N,N'-Tetramethylmelamin kommt. Die Reaktionsprodukte können unmittelbar zur Herstellung von Formaldehydkondensationsprodukten verwendet werden.

In den US-Schutzrechten 3056755 und 2980637 wird die Verwendung von Di- und Trialkylmelaminen und deren Kondensationsprodukte mit Formaldehyd und teilweise auch Alkoholen als Bestandteil von Einbrennlacken beschrieben. Hierbei sind die beschriebenen Harze aber immer nur ein Bestandteil, der meist zur Vernetzung von Alkydharzen verwendet wird. Die Anwendungen dieser Kondensationsprodukte beschränken sich auf Lacksysteme, in denen die Melaminprodukte als Vernetzungsmittel verwendet werden. Die Kondensationsprodukte sind zur Ausbildung von vernetzten Polymeren geeignet, die in der Regel nicht oder nur sehr schlecht in der Schmelze verarbeitbar sind. Auch wird in keinem dieser Fälle von thermoplastischen Eigenschaften der Melamin-Formaldehyd-Kondensationsprodukte berichtet.

Der Erfindung liegt nunmehr das Problem zu Grunde, neuartige Melamin-Formaldehyd-Kondensationsprodukte bereitzustellen, die eine gute thermoplastische Verarbeitbarkeit, gute post-forming Eigenschaften und gute mechanische Eigenschaften aufweisen.

Diese Aufgabe wird durch die Bereitstellung eines Melamin-Formaldehyd-Kondensationsproduktes mit den Merkmalen des Anspruchs 1 gelöst.

Das erfindungsgemäße Melamin-Formaldehyd-Kondensationsprodukt mit thermoplastischen Eigenschaften wird dabei aus Formaldehyd und Melaminderivaten hergestellt, wobei in mindestens einem der Melaminderivate vor Umsetzung mit Formaldehyd mindestens vier der insgesamt sechs Wasserstoffatome der drei Aminogruppen des Melamins durch organische Reste R substituiert sind, so dass freie Wasserstoffatome an zwei sekundären Aminogruppen des Melaminderivats vorliegen, wobei die organischen Reste R untereinander gleich oder verschieden sind und mindestens ein organischer Rest R ein C₁-C₂₀-Alkyl, ein C₅-C₃₀-Cycloalkyl, ein C₆-C₂₄-Aryl und / oder ein C₇-C₃₀-Arylalkyl-Rest ist.

Die Aminogruppen des Melamins liegen also N-substituiert vor. Die erfindungsgemäß verwendeten Melaminderivate weisen somit lediglich nur noch zwei freie Wasserstoffatome an den Aminogruppen des Melamins auf, die einer weiteren chemischen Reaktion zugänglich sind.

Die freien Wasserstoffatome liegen erfindungsgemäß an zwei sekundären Aminogruppen vor. Dies ist bedingt durch die unterschiedliche chemische Reaktivität von primären und sekundären Aminen, wobei eine Substitution immer bevorzugt zunächst an primären und dann erst an sekundären Aminogruppen erfolgt. Somit weisen die erfindungsgemäß verwendeten Melaminderivate bevorzugt zwei sekundäre und eine tertiäre Aminogruppen auf.

Bei Umsetzung der erfindungsgemäß verwendeten Melaminderivate mit Formaldehyd kommt es daher lediglich zur Ausbildung von zwei Methylolgruppen pro Melaminring, bevorzugt an zwei unterschiedlichen sekundären Aminogruppen. Dies bedingt eine bevorzugte Ausbildung von linearen Oligomeren und Polymeren in der weiterführenden Kondensation.

Die linearen Kettenmoleküle können bei entsprechenden Temperaturen aneinander abgleiten, wodurch das Harz bereits bei relativ niedrigen Temperaturen schmelzbar und thermoplastisch verarbeitbar wird. Die erfindungsgemäßen Kondensationsprodukte weisen daher ein sehr gutes Fließverhalten auf und lassen sich ausgezeichnet in Formgebungswerkzeugen verteilen.

Rein lineare Melamin-Formaldehyd-Kondensationsprodukte erhält man, wenn bei 100% der eingesetzten Melaminderivate vier der sechs Amino-Wasserstoffatome substituiert sind. Bei der Umsetzung dieser Melaminderivate mit Formaldehyd werden die so entstehenden Polymere in eine lineare Architektur gezwungen.

Vorteilhafterweise enthalten die Melamin-Formaldehyd-Kondensationsprodukte zwischen 10 bis 99 % Melaminderivate, bei denen vier der insgesamt sechs Wasserstoffatome der drei Aminogruppen des Melamins durch organische Reste R substituiert sind.

Es können somit neben den mindestens vierfach substituierten Melaminderivaten auch weitere Komponenten in den Melamin-Formaldehyd-Kondensationsprodukten enthalten sein. So werden mit Vorteil unsubstituiertes Melamin bzw. ein- bis sechsfach substituierte Melaminderivate oder Mischungen davon verwendet. Der Substitutionsgrad der in den Mischungen verwendeten Melaminderivate ist somit variabel. Dabei können bei den verschiedenen Substitutionsgraden sowohl gleiche organische Reste R als auch unterschiedliche Reste R eingesetzt werden.

So können Melamin-Formaldehyd-Kondensationsprodukte hergestellt werden, die unterschiedliche Anteile an linearen Strukturen aufweisen. Sind bei 10 bis 99 % der eingesetzten Melaminderivate vier der sechs Amino-Wasserstoffatome bereits substituiert, so können bei den restlichen 90 bis 1 % des eingesetzten Melaminderivate null bis sechs der der insgesamt sechs Amino-Wasserstoffatome durch einen organischen Rest substituiert sein oder es können beliebige Mischungen dieser Melaminderivate eingesetzt werden.

Vorteilhafterweise enthalten die Melamin-Formaldehyd-Kondensationsprodukte neben den mindestens vierfach N-substitierten Melaminderivaten auch zwischen 90 bis 1 % Acetoguanamin, Benzoguanamin, substituierte bzw. umaminierte Actoguanamine oder Benzoguanamine, Phenole oder beliebige Mischungen davon.

Als zur Derivatisierung bzw. N-Substitution weitere geeignete organische Reste R kommen vorteilhafterweise ein Hydroxy-C₂-C₁₀-Alkyl-, ein Hydroxy-C₂-C₄-alkyl-(oxa-C₂-C₄-alkyl)ₙ - mit n von 1 bis 5, und / oder ein Amino-C₂-C₁₂-Alkyl-Rest zum Einsatz.

Bevorzugt sind dabei Ethyl-, Propyl-, Isopropyl- oder Benzyl-Reste und besonders bevorzugt Methylreste. Ein Vorteil in der Verwendung von Methylgruppen besteht in deren leichten Zugänglichkeit über viele Methylierungsreagenzien. Ein weiterer Vorteil liegt auch darin, dass Methylgruppen klein sind, somit die Struktur des Melamins nur gering beeinflussen und somit die Melamineigenschaften möglichst erhalten bleiben.

Die Melamin-Formaldehyd-Kondensationsprodukte weisen mit Vorteil einen teilweisen linearen Aufbau, bevorzugt jedoch einen vollständig linearen Aufbau auf.

Insgesamt werden durch die gezielte Derivatisierung bzw. N-Substitution der Aminogruppen des Melamins vor der Herstellung von Melamin-Formaldehyd-Kondensationsprodukten neue Materialien erzeugt die interessante neue Eigenschaften besitzen. Durch eine Variation des N-Substitutionsgrades oder der Verwendung einer Mischung von Melaminderivaten mit verschiedenen Substitutionsgraden sowie durch eine Mischung mit underivatisiertem Melamin können diese Eigenschaften in einem breiten Spektrum variiert werden.

Durch die Derivatisierung bzw. N-Substitution der Aminogruppen wird eine verbesserte Löslichkeit der Triazinderivate erreicht. Dadurch ist eine schonende Harzherstellung möglich, so erfolgt teilweise bereits bei Raumtemperatur eine Umsetzung mit Formaldehyd. Ferner werden wesentlich einheitlichere Harze erhalten, da bereits zu Reaktionsbeginn das gesamte Melaminderivat gelöst vorliegt und nicht erst durch Reaktion in Lösung gebracht wird. So kann durch die Wahl der Reaktionsbedingungen und der Reaktionszeiten eingestellt werden, ob bevorzugt Monomer, Dimere, Trimere oder Oligomer gebildet werden. Damit ist auch deutlich, dass enge Molmassenverteilungen erzielbar sind. Die breite der Molmassenverteilung kann aber auch durch die Zusammensetzung aus unterschiedlichen Melaminderivaten breit variiert werden.

Vorteilhaft ist ferner, das bedingt durch die verbesserte Löslichkeit der derivatisierten Melamine auch die Formaldehydmenge bei der Harzherstellung reduziert werden kann bis zu einem Verhältnis von Melaminderivaten zu Formaldehyd von 1:1. Dennoch kann durch Erhöhung der Temperatur oder Zugabe von Härtungskatalysatoren eine Vernetzung der Harze erreicht werden. So ist es aber möglich, Bauteile mit verringerten Emissionen herzustellen, sowohl was die Formaldehydemissionen als auch die VOC-Emissionen betrifft.

Vorteilhafterweise weisen die erfindungsgemäßen Melamin-Formaldehyd-Kondensationsprodukte einen Schmelzbereich zwischen 70 bis 130°C und eine Schmelzviskosität von 0.1 bis 100 Pas auf.

Die Kondensationsprodukte sind auch dadurch gekennzeichnet, dass in einem Temperaturbereich zwischen 70 und 130 °C keine Vernetzung zwischen den meist linear vorliegenden Kondensationsprodukten auftritt. Eine Vernetzung der meist linearen Kondensationsprodukte tritt erst bei Temperaturen über 130°C oder nach Zugabe eines Härtungskatalysators auf.

Mit Vorteil liegen die die Methylolgruppen der Melamin-Formaldehyd-Kondensationsprodukte teilweise oder vollständig verethert vor, wobei bevorzugte Alkohole zur Veretherung Methanol, Ethanol, Propanol, Isopropanol, Butanol, Cyclohexanol, Phenol, Benzylalkohol, Monoalkylether von Ethylen- oder Propylenglykol oder Mischungen davon sind.

Die Aufgabe der vorliegenden Erfindung wird auch durch ein Verfahren zur Herstellung der Melamin-Formaldehyd-Kondensationsprodukte gemäß Anspruch 5 und deren Verwendung gemäß der Ansprüche 9 und 11 gelöst.

Erfindungsgemäß werden die Melamin-Formaldehyd-Kondensationsprodukte nach einem Verfahren hergestellt, bei dem die Reaktion von
a) Melaminderivaten, wobei in den Melaminderivaten vier der insgesamt sechs Wasserstoffatome der drei Aminogruppen des Melamins durch organische Reste R substituiert sind, so dass freie Wasserstoffatome an zwei sekundären Aminogruppen vorliegen, wobei die organischen Reste untereinander gleich oder verschieden sind und mindestens ein organischer Rest R C₁-C₂₀-Alkyl, ein C₅-C₃₀-Cycloalkyl, ein C₆-C₂₄-Aryl oder ein C₇-C₃₀-Arylalkyl; und / oder
b) optional Mischungen aus Melaminderivaten gemäß a) und Melaminderivaten, bei denen keines, und / oder eines bis sechs der insgesamt sechs Wasserstoffatome der drei Aminogruppen durch organische Reste substituiert ist, und / oder
c) optional Mischungen aus Melaminderivaten gemäß a) und Acetoguanamin, Benzoguanamin, substituierte bzw. umaminierte Actoguanamine, Guanamine und / oder Phenole,
mit Formaldehyd in einem Lösungsmittel, bevorzugt Wasser, in einem Verhältnis von 1:1 bis 1:6, bevorzugt 1:1 bis 1:3, durchgeführt wird.

Die Reaktion erfolgt vorteilhafterweise in alkalischen Medium, ist aber auch in neutralem oder sauren Medium möglich.

Die im erfindungsgemäßen Verfahren eingesetzten Melaminderivate weisen als weitere organische Reste ein Hydroxy-C₂-C₁₀-Alkyl-, ein Hydroxy-C₂-C₄-alkyl-(oxa-C₂-C₄-alkyl)ₙ - mit n von 1 bis 5, und / oder ein Amino-C₂-C₁₂-Alkyl-Rest, insbesondere ein Methyl-, Ethyl-, Propyl-, Isopropyl- oder Benzyl-Rest, auf.

Mit Vorteil werden die Melamin-Formaldehyd-Kondensationsprodukte unter saurer Katalyse mit Alkoholen, bevorzugt Methanol, Ethanol, Propanol, Isopropanol, Butanol, Cyclohexanol, Phenol, Benzylalkohol, Monoalkylether von Ethylen- oder Propylenglykol oder Mischungen, verethert werden.

Die erfindungsgemäßen Melamin-Formaldehyd-Kondensationsprodukte werden als Bindemittel in Laminaten eingesetzt. Die Kondensationsprodukte erlauben dabei Postforming-Eigenschaften auch ohne eine Veretherung der Methylolgruppen. Da die erfindungsgemäßen Melamin-Formaldehyd-Kondensationsprodukte sowohl in Lösung als auch als getrocknetes Pulver erhalten werden können, ist sowohl eine Nassimprägnierung als auch eine Trockenimprägnierung möglich.

Ferner finden die erfindungsgemäßen Melamin-Formaldehyd-Kondensationsprodukte als Bindemittel in Verbundwerkstoffen mit Naturfasern, Glasfasern, Holzprodukten sowie weitern Füllstoffen und Additiven Verwendung. Die Verbundwerkstoffe können zum Beispiel Holz, Naturfasern, Glasfasern, organische, anorganisch Füllstoffe, synthetische Fasern (zB Polyamid, Polyester) enthalten.

Die erfindungsgemäßen Melamin-Formaldehyd-Kondensationsprodukte eignen sie sich für alle gängigen Verarbeitungsmethoden wie z. B. Spritzguß, Formpressen, Extrusion etc.

Auch als Bestandteil von Lacksystemen sind die erfindungsgemäßen Melamin-Formaldehyd-Kondensationsprodukte einsetzbar.

Die Aufgabe der vorliegenden Erfindung wird ebenfalls durch ein Verfahren zur analytischen Bestimmung der erfindungsgemäßen Melamin-Formaldehyd-Kondensationsprodukte gelöst.

Die Strukturen werden durch eine Kombination von verschiedenen analytischen Methoden bestimmt. Außerdem wird die Veränderung der spektroskopischen Eigenschaften mit dem Verlauf des Polymerisationsgrades verfolgt. Das Wissen um diese Daten ist essentiell für eine korrekte Quantifizierung der einzelnen Spezies innerhalb einer komplexen Harzmischung.

Eine Trennung der Harzbestandteile erfolgt mittels Hochdruckflüssigkeitschromatograpie (HPLC) und Gel- Permeationschromatographie (GPC). Die HPLC- oder GPC-Fraktionen werden gesammelt, massenspektroskopisch analysiert und die Ergebnisse mit den Resultaten von Laserlichtstreuungsmessungen sowie mit externen Kalibrierungen mittels Polymerstandards verglichen. Die analytischen Methoden umfassen dabei HPLC-Massenspektroskopie (MS), ESI-Ion-Trap-MS und MALDI-TOF-MS.

Ferner wird eine Probe mittels Pyrolyse - Gaschromatographie (GC)-(MS) untersucht.

Die Charakterisierung der Harzmischungen erfolgt auch durch HPLC in Verbindung mit einem PDA Detektor und einem Ion-Trap-Massenspektrometer das MSⁿ Experimente durchführen kann.

Durch Anwendung dieser Methoden ist eine zweifelsfreie Zuordnung der einzelnen Spezies der Mischung möglich. Bei der Vernetzung der Verbindungen werden diese mehr und mehr unlöslich in für HPLC/MS Messungen geeigneten Lösungsmitteln. Daher werden die Harze auf GPC Systemen mit IR-, UV- und Streulicht-Detektoren getrennt und die gesammelten Fraktionen massenspektroskopisch untersucht, um die korrekten Molmassen zu bestimmen.

Komplett ausgehärtete Systeme sind nicht mehr löslich und deshalb ebenfalls einer flüssigchromatographischen Untersuchung nicht mehr zugänglich. Die Charakterisierung erfolgt deshalb mit Hilfe analytischer Pyrolyse und thermisch induzierter Hydrolyse und Methylierung (THM) an einem GC/MS System. Mit Hilfe dieser Technik können nicht nur die Harzbestandteile sondern auch Füllstoffe und Additive bestimmt werden.

Die Erfindung wird nachfolgend unter Bezugnahme auf die Figuren 1 bis 3 und mehreren Ausführungsbeispielen näher erläutert. Es zeigen:
- Figur 1:: Synthese einer bevorzugten Ausführungsform der erfindungsgemäßen Melamin-Formaldehyd-Kondensationsprodukte
- Figur 2A:: ein ESI-MS-Spektrum eines noch nicht gehärteten Melamin-Formaldehyd-Kondensationsproduktes
- Figur 2B:: ein ESI-MS-Spektrum eines ausgehärteten Melamin-Formaldehyd-Kondensationsproduktes
- Figur 3A: ein Chromatogramm einer Auftrennung einer Probe eines Melamin-Formaldehydproduktes mittels GPC und nachfolgender MALLS und RI-Detektion
- Figur 3B: ein Chromatogramm einer Auftrennung einer Probe eines Melamin-Formaldehydproduktes mittels HPLC mit nachfolgender MS und UV-Detektion
- Figur 4:: ein Chromatogramm einer Auftrennung einer Probe eines Melamin-Formaldehydproduktes mittels Hochdruckflüssigkeitschromatographie (HPLC)
- Figur 5:: ein Chromatogramm einer Auftrennung einer Probe eines Melamin-Formaldehydproduktes mittels Gelpermeationschromatograpie (GPC) und ein Massenspektrogramm (MS) zur Bestimmung der molekularen Masse einer ausgewählten Fraktion
- Figur 6:: ein Pyrogram einer Pyrolyse-GC/MS-Analyse

### Beispiel 1: Herstellung von 2,4-Bis-methyl-6-dimethyl-melamin als methyliertes Melaminderivat

Die Umsetzung erfolgt unter Rühren aus Cyanurchlorid (1 mol) mit 2 mol Methylamin (40%ig) in Aceton bei einer Reaktionstemperatur von 0 bis -5 °C. Nach Zugabe von NaOH (2 mol) erhitzt man, bis eine Temperatur von ca. 40-45 °C erreicht wird. Nach einer Reaktionszeit von ca. 2 Stunden wird das Produkt abfiltriert. Das Produkt wird in Wasser mit einem Überschuss an Dimethylamin unter gleichzeitiger Zugabe von NaOH gerührt und ca. 2 Stunden unter Rückfluss erhitzt. Anschließend wird abgekühlt, filtriert und getrocknet. Der Schmelzpunkt Fₚ des erhaltenen Produktes liegt bei 86-87 °C.

### Beispiel 2: Herstellung eines ersten Melamin-Formaldehyd-Kondensationsproduktes

Ein mol des methylierten Melamins nach Beispiel 1 wird bei 40°C mit 1 mol Formaldehyd (als 37%ige Formalinlösung) bei pH 8 zur Reaktion gebracht. Dabei bleibt die gesamte Reaktionszeit eine Suspension erhalten, die sich in ihrer Konsistenz aber deutlich erkennbar verändert. Nach 60 min ist die Reaktion beendet, das Produkt wird abfiltriert und im Vakuum getrocknet. Man erhält ein Pulver mit einem Schmelzpunkt um 120°C und einer Molmasse von 300-400. Das Produkt besteht vorwiegend aus Di- und Trimeren. Die Aushärtung zum Harz erfolgt bei erhöhten Temperaturen und saurer Katalyse.

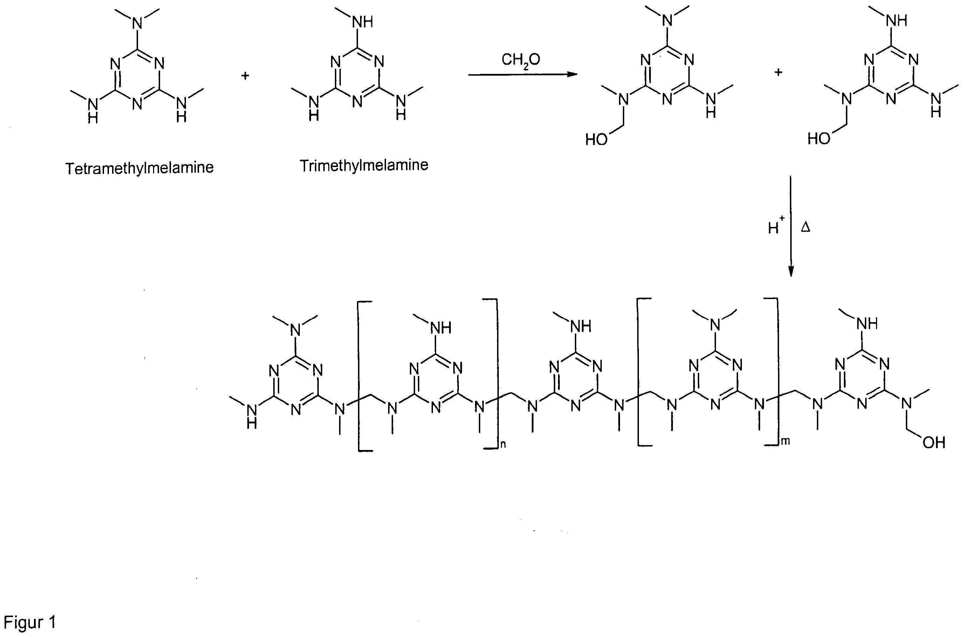

Der Syntheseweg, die Struktur des erhaltenen Kondensationsproduktes sowie ein Strukturausschnitt aus dem ausgehärteten Harz sind in Figur 1 gezeigt.

Die im Verlaufe des Aushärtungsprozesses stattfindende Polymerisation wird mittels ESI.-MS sichtbar.

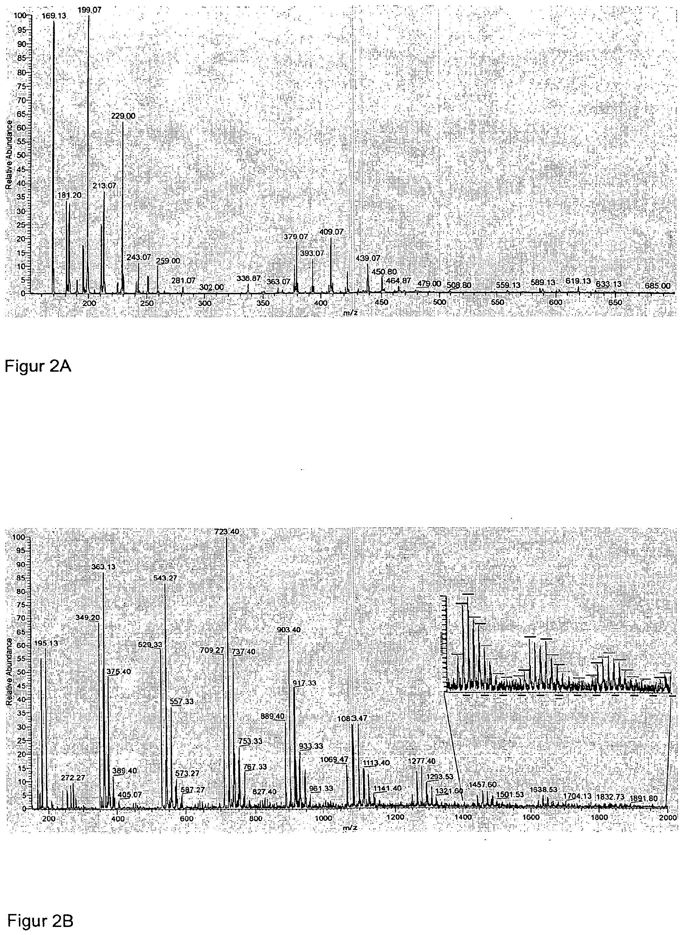

Figur 2A zeigt ein ESI-MS-Spektrum eines noch nicht gehärteten Melamin-Formaldehyd-Kondensationsproduktes aus Tri- und Tetra-Methylmelamin. In der Monomer-Region von 169-259 Da sind methylolierte Melamineinheiten mit einem durchschnittlichen Substitutionsgrad von 1 erkennbar. Die Region von 349-469 Da umfasst drei verschiedene Typen von Dimeren auf: eine Hexamethylspezies (349 Da), eine Heptamethylspezies (363 Da) und eine Octamethylspezies (377 Da). Die am häufigsten vorkommene Spezies ist das Hexamethyldimer mit ein oder zwei Methylolgruppen (379 Da, 409 Da).

Figur 2b zeigt ein ESI-MS desselben Kondensationsproduktes nach erfolgter Aushärtung durch Ameisensäure bei 140°C. Die am häufigsten auftretenden Peaks liegen bei ca. 700 Da, die Tetrameren zugeordnet werden können. Die höchste Masse ist bei über 2000 Da nachweisbar.

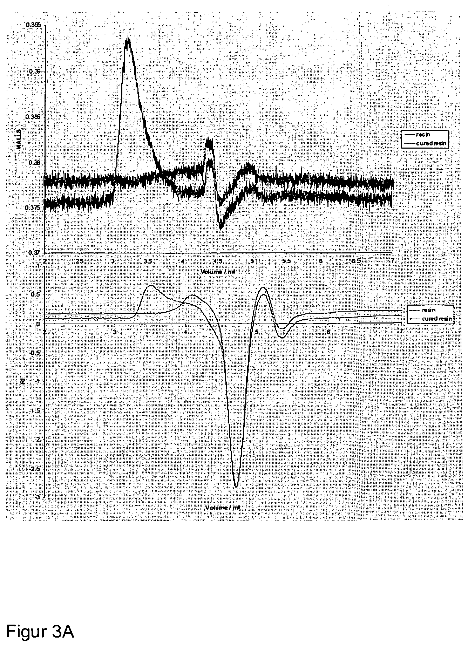

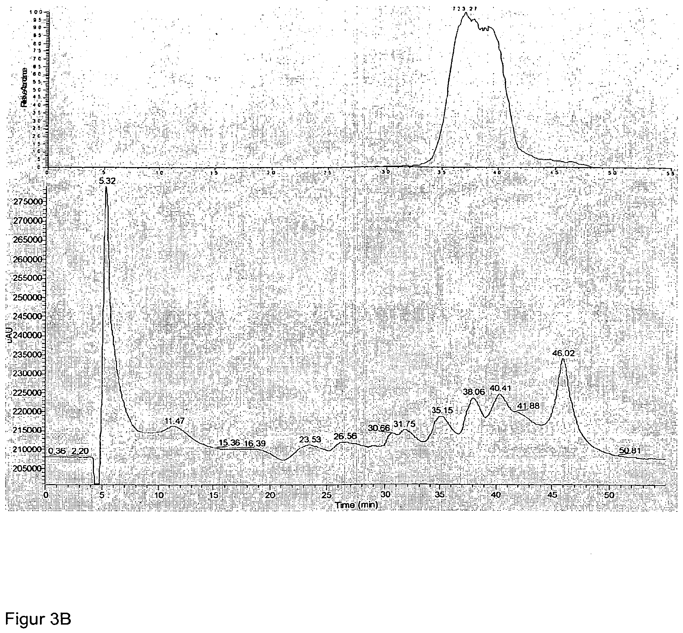

Die Auftrennung einer Probe des Harzes wurde mittels GPC mit nachfolgender MALLS und RI-Detektion (Figur 3A) und mittels HPLC mit nachfolgender MS und UV-Detektion (Figur 3B) verfolgt. Bei Verwendung von HPLC-MS ist eine bessere Separation der Oligomere im Vergleich zu GPC erkennbar. Auf Grund der hohen Anzahl von verschiedenen Spezien ist eine klare Trennung in die einzelnen Isomere noch nicht möglich.

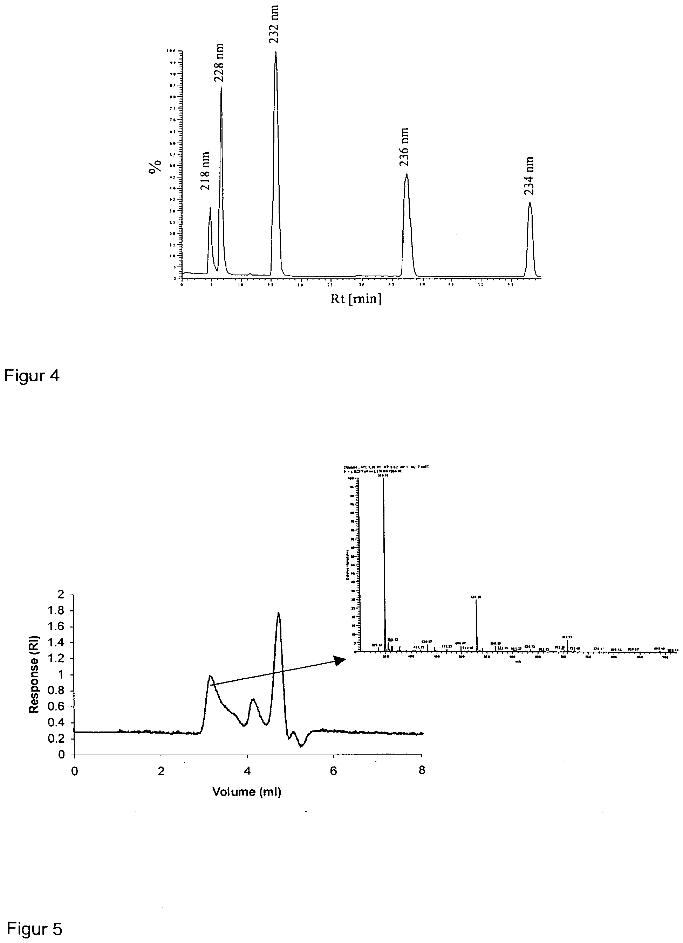

In Figur 4 ist die Abhängigkeit der UV Absorptionsmaxima vom Polymerisationsgrad dargestellt. Figur 4 zeigt die analytische Charakterisierung des Kondensationsproduktes mittels HPLC - Auftrennung. Eine Probe des Harzes aus Beispiel 1 wurde in der HPLC mit einem PDA-Detektor in seine Bestandteile aufgetrennt und mittels lonenfalle-MS, ESI-MS und MALDI-TOF MS deren Molmassen bestimmt. Daraus kann dann die Struktur der einzelnen Spezies bestimmt werden (vgl. Figur 1). Das Harz aus Beispiel 1 besteht zu ca. 55 % aus Dimeren (n=0), ca. 35% Trimeren (n=1) und zu etwa 10% aus höheren Homologen (n>1).

Figur 5 zeigt die analytische Charakterisierung des Kondensationsproduktes mittels GPC / MS. Eine Probe des Harzes aus Beispiel 1 wurde auf einem GPC-System mit RI-, UV- und Lichtstreudetektor aufgetrennt, die Fraktionen und mittel MS ihre Molmasse bestimmt. So konnte ebenfalls die Zusammensetzung der Probe ermittelt werden.

Bei kompletter Aushärtung sind die resultierenden Polymere nicht länger in organischen Lösungsmitteln löslich und können daher nicht mittels üblichen HPLC, GPC oder Lösungsmittel basierenden MS-Techniken möglich. In solchen Fällen hat sich die Pyrolyse-GC/MS als wertvolle analytische Methode erwiesen.

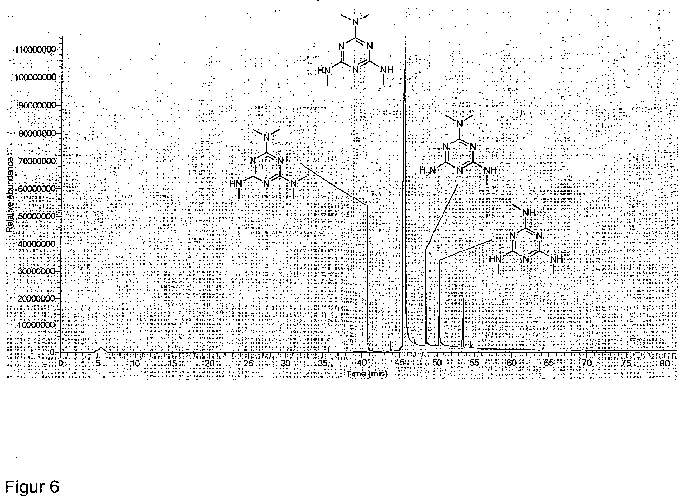

Figur 6 zeigt ein Pyrolyse-GC/MS Spektrograms eines ausgehärteten Tetramethylmelamin-Harzes. Die Hauptprodukte der Pyrolyse ergeben sich aus dem Bindungsbruch der Methylenbrücken.

### Beispiel 3: Herstellung eines zweiten Melamin-Formaldehyd-Kondensationsproduktes

Zu 90 ml Wasser werden 6 g Tetramethylmelamin und 24 g Trimethylmelamin zugegeben und die Mischung auf 70°C erhitzt. Dann wird Formalinlösung (14,3 g) entsprechend einem Verhältnis Formaldehyd : Triazin von 1 : 1 zugegeben. Der pH-Wert der Reaktionsmischung beträgt 8,2. Die Mischung wird für 30 min auf 70°C gehalten, abgekühlt und einrotiert. Man erhält das Harz als weißen Feststoff. Das Harz schmilzt in einem Bereich von 80-100°C, die Molmassen betragen 300-400. Durch Erhitzen auf 140°C (evtl. unter Zugabe von Säure) kann das Harz ausgehärtet werden, wobei die Molmasse auf deutlich über 2000 steigt.

### Beispiel 4: Herstellung eines dritten Melamin-Formaldehyd-Kondensationsproduktes

Zu 80 ml Wasser werden 10 g Melamin und 2,5 g Tetramethylmelamin gegeben und auf 80°C erwärmt. Dann werden 6 g Formaldehyd als Formalinlösung zugegeben und 15 min auf 70°C gehalten. Anschließend wird abgekühlt und einrotiert. Man erhält das Harz als weißen Feststoff. Das Harz schmilzt bei 120°C-125°C. Die Molmasse beträgt ca. 350.

### Beispiel 5: Herstellung eines vierten Melamin-Formaldehyd-Kondensationsproduktes

Zu 100 ml Wasser werden 15 g einer Mischung aus Melamin und methylierten Melaminen (18% Tetramethylmelamin, 30% Trimethylemalmin, 24% Dimethylmelamin, 15% Monomethylmelamin, 13% Melamin) gegeben und auf 90°C erwärmt. Dann werden 10 g Formaldehyd als Formalinlösung zugegeben. Die Mischung wird 30 min bei 90°C gehalten, abgekühlt und einrotiert. Man erhält das Harz als weißen Feststoff. Das Harz schmilzt in einem Bereich von 90-110°C, die Molmasse beträgt 400-500.

### Beispiel 6: Herstellung eines ersten Laminates unter Verwendung eines Melamin-Formaldehyd-Kondensationsproduktes

Auf einer Cavitec Anlage werden Dekorpapiere mit 150-250% des Polymers aus Beispiel 2 bestreut und im IR-Feld fixiert. Anschließend werden die Papiere in einer Laminatpresse bei 160-190°C und Drücken von 80-110 bar für 5 min verpresst. Die Probekörper weisen glatte, matte Oberflächen auf. Die Säuretests liefern um eine Stufe schlechtere Ergebnisse als reine MF-Harze.

Im Verformungstest nach EN 438 Methode A werden Biegeradien von 3-4 mm mit 0,7 mm Laminaten erreicht.

### Beispiel 7: Herstellung eines zweiten Laminates unter Verwendung eines Melamin-Formaldehyd-Kondensationsproduktes

Auf einer Cavitec Anlage werden Dekorpapiere mit 150-250% einer Mischung aus 90% des Polymers aus Beispiel 2 und 10% Lamelite 139 (MF-Harz von AMI) bestreut und im IR-Feld fixiert. Anschließend werden die Papiere in einer Laminatpresse bei 160-190°C und Drücken von 80-110 bar für 5 min verpresst. Die Probekörper weisen glatte, matte Oberflächen auf. Die Säuretests liefern Ergebnisse die dem reinen Lamelite 139 vergleichbar sind.

Im Verformungstest nach EN 438 Methode A werden ebenfalls Biegeradien von 3-4 mm mit 0,7 mm Laminaten erreicht.

### Beispiel 8: Herstellung eines Formkörpers unter Verwendung des Melamin-Formaldehyd-Kondensationsproduktes

Auf einer Cavitec-Anlage werden Flachsfaser-Vliese mit 35% des Harzes aus Beispiel 2 bestreut. Anschließend wird das Polymer im IR-Feld fixiert. Diese Prepregs werden anschließend bei 190°C und 120 bar für 3 min verpresst. Nach Rückkühlung auf 70°C werden die Probekörper entnommen.

Die mechanischen Kennwerte der Probekörper entsprechen weitgehend denen von Probekörpern, die mit unsubstituierten Melamin-Harzen hergestellt wurden.

### Beispiel 9: Herstellung von Verbundwerkstoffen unter Verwendung des Melamin-Formaldehyd-Kondensationsproduktes

a) Eine Mischung aus 50 g Harz nach Beispiel 2 und 50 g Holz wird unter Zugabe von 0,5 g NH₄Cl bei 150°C und 80 bar Druck zu Platten verpresst. Diese Platten weisen im Biegeversuch ein E-Modul von 2295 MPa auf.
b) Eine Mischung aus 15 g Harz nach Beispiel 2 und 50 g Holz wird unter Zugabe von 0,15 g NH₄Cl bei 150°C und 80 bar Druck zu Platten verpresst. Diese Platten weisen im Biegeversuch ein E-Modul von 3116 MPa auf.
c) Eine Mischung aus 15 g Harz nach Beispiel 3 und 50 g Cellulose wird unter Zugabe von 0,15 g NH₄Cl bei 150°C und 80 bar Druck zu Platten verpresst. Diese Platten weisen im Biegeversuch ein E-Modul von 4258 MPa auf.

Eine Standardspanplatte der Fa. Egger (8mm Dicke, 95% Holz) weißt zum Vergleich ein E-Modul von 2282 MPa auf.

### Beispiel 10: Herstellung eines fünften Melamin-Formaldehyd-Kondensationsproduktes

693,6 g N,N'-Dimethylmelamin, 91,8 g Wasser und 584,1 g einer 37%igen wässrigen Formaldehydlösung werden gemeinsam auf 60°C erhitzt bis eine klare Lösung erhalten wird. Dann wird rasch auf Raumtemperatur gekühlt.

756,9 g N,N',N"-Trimethylmelamin, 135 g Wasser und 584,1 g einer 37%igen wässrigen Formaldehydlösung werden gemeinsam bei Raumtemperatur gerührt, bis aus der Lösung die gebildeten Methylolmelamine ausfallen. Dann wird diese Mischung mit der oberen Mischung und weiteren 350 g Melaminderivat nach Beispiel 1 vereinigt und für 15 min auf 60°C erhitzt. Dabei erhält man eine klare Lösung. Nach Gefriertrocknung erhält man das Harz als weißen Feststoff.

### Beispiel 11: Herstellung von Verbundwerkstoffen unter Verwendung des Melamin-Formaldehyd-Kondensationsproduktes

Auf einer Cavitec-Anlage werden Flachsfaser-Vliese mit 35% des Harzes aus Beispiel 10 bestreut. Anschließend wird das Polymer im IR-Feld fixiert. Diese Prepregs werden anschließend bei 160°C und 250 bar für 4 min verpresst. Nach Rückkühlung auf 70°C werden die Probekörper entnommen.

Die mechanischen Kennwerte des Verbundwerkstoffes können der folgenden Tabelle entnommen werden.

| Zugmodul MPa | Zugfestigkeit MPa | Biegemodul MPa | Biegefestigkeit MPa | Schlagzähigkeit kJ/m² |
|---|---|---|---|---|
| 9320 | 77,2 | 8311 | 131,7 | 20,5 |

Die Bauteilemissionen nach VDA 275 (Formaldehyd) und VDA 277 (VOC - volatile organic content) liegen bei 29,6 bzw. 18,5 ppm.

Die Bauteilemissionen eines vergleichbaren Verbundes hergestellt aus Lamelite 139 (Melamin-Formaldehyd-Harz) liegen bei 45,0 bzw. 77,0 ppm.

## Patentansprüche

1. Formaldehyd-Kondensationsprodukte mit thermoplastischen Eigenschaften,
**herstellbar**
durch eine Reaktion von Formaldehyd mit Melaminderivaten, wobei in mindestens einem der Melaminderivate vor Umsetzung mit Formaldehyd vier der insgesamt sechs Wasserstoffatome der drei Aminogruppen des Melamins durch organische Reste R substituiert sind, so dass freie Wasserstoffatome an zwei sekundären Aminogruppen des Melaminderivats vorliegen, wobei die organischen Reste R untereinander gleich oder verschieden sind und mindestens ein organischer Rest R ein C₁-C₂₀-Alkyl, ein C₅-C₃₀-Cycloalkyl, ein C₆-C₂₄-Aryl und/oder ein C₇-C₃₀-Arylalkyl-Rest ist, wobei die Kondensationsprodukte zu 10 bis 99 % Melaminderivate enthalten, bei denen vier der insgesamt sechs Wasserstoffatome der drei Aminogruppen des Melamins durch organische Reste R substituiert sind.

2. Formaldehyd-Kondensationsprodukte nach mindestens einem der vorhergehenden Ansprüche, **dadurch gekennzeichnet, dass** mindestens ein organischer Rest R ein Ethyl-, Propyl-, Isopropyl-, Benzyl- und / oder Methylrest ist.

3. Formaldehyd-Kondensationsprodukte nach mindestens einem der vorhergehenden Ansprüche, **gekennzeichnet durch** einen Schmelzbereich zwischen 70 und 130°C.

4. Formaldehyd-Kondensationsprodukte nach mindestens einem der vorhergehenden Ansprüche, **dadurch gekennzeichnet, dass** die durch die Reaktion von Formaldehyd mit den Melaminderivaten gebildeten Methylolgruppen teilweise oder vollständig verethert vorliegen.

5. Ein Verfahren zur Herstellung von Formaldehyd-Kondensationsprodukten nach mindestens einem der Ansprüche 1 bis 4,
**gekennzeichnet durch**
die Reaktion von
Melaminderivaten, wobei in den Melaminderivaten vier der insgesamt sechs Wasserstoffatome der drei Aminogruppen des Melamins durch organische Reste R substituiert sind, so dass freie Wasserstoffatome an zwei sekundären Aminogruppen des Melaminderivats vorliegen, wobei die organischen Reste R untereinander gleich oder verschieden sind und mindestens ein organischer Rest R ein C₁-C₂₀-Alkyl, ein C₅-C₃₀-Cycloalkyl, ein C₆-C₂₄-Aryl und/oder ein C₇-C₃₀-Arylalkyl-Rest ist,
mit Formaldehyd in einem Lösungsmittel, in einem Verhältnis von 1:1 bis 1:6, bevorzugt 1:1 bis 1:3.
wobei die Kondensationsprodukte zu 10 bis 99 % Melaminderivate enthalten, bei denen vier der insgesamt sechs Wasserstoffatome der drei Aminogruppen des Melamins durch organische Reste R substituiert sind.

6. Verfahren nach Anspruch 5, **dadurch gekennzeichnet, dass** als Lösungsmittel Wasser verwendet wird.

7. Verfahren nach Anspruch 5 oder 6, **dadurch gekennzeichnet, dass** die Reaktion im alkalischen Medium erfolgt.

8. Verfahren nach einem der Ansprüche 5 bis 7, **dadurch gekennzeichnet, dass** mindestens ein organischer Rest R ein Methyl-, Ethyl-, Propyl-, Isopropyl- oder Benzyl-Rest ist.

9. Verfahren nach mindestens einem der Ansprüche 5 bis 8, **dadurch gekennzeichnet, dass** die Melamin-Formaldehyd-Kondensationsprodukte unter saurer Katalyse mit Alkoholen, bevorzugt Methanol, Ethanol, Propanol, Isopropanol, Butanol, Cyclohexanol, Phenol, Benzylalkohol, Monoalkylether von Ethylen- oder Propylenglykol oder Mischungen, verethert werden.

10. Verwendung von Melamin-Formaldehyd-Kondensationsprodukten nach einem der Ansprüche 1 bis 5 als Bindemittel in Laminaten und / oder Verbundwerkstoffen.

11. Verwendung von Melamin-Formaldehyd-Kondensationsprodukten nach einem der Ansprüche 1 bis 5 als Bestandteil von Lacken.

## Claims

1. Formaldehyde condensation products having thermoplastic properties,
**preparable**
by a reaction of formaldehyde with melamine derivatives, wherein four of the total of six hydrogen atoms of the three amino groups of the melamine being substituted by organic moieties R in at least one of the melamine derivatives before conversion with formaldehyde, so that free hydrogen atoms are present on two secondary amino groups of the melamine derivative, the organic moieties R being identical to or different from one another, and at least one organic moiety R being a C₁-C₂₀-alkyl, a C₅-C₃₀-cycloalkyl, a C₆-C₂₄-aryl and/or a C₇-C₃₀-arylalkyl moiety, wherein the condensate products contain from 10 to 99% of melamine derivatives in which four of the total of six hydrogen atoms of the three amino groups of the melamine are substituted by organic moieties R.

2. The formaldehyde condensation products as claimed in at least one of the preceding claims, **characterized in that** at least one organic moiety R is an ethyl, propyl, isopropyl, benzyl and/or methyl moiety.

3. The formaldehyde condensation product as claimed in at least one of the preceding claims, **characterized by** a melting range between 70 and 130°C.

4. The formaldehyde condensation product as claimed in at least one of the preceding claims, **characterized in that** the methylol groups formed by reaction of formaldehyde and the melamine derivatives are present in partly or completely etherified form.

5. A process for the preparation of formaldehyde condensation products as claimed in at least one of claims 1 to 4, **characterized by** the reaction of
melamine derivatives, wherein four of the total of six hydrogen atoms of the three amino groups of the melamine being substituted by organic moieties R in the melamine derivatives, so that free hydrogen atoms are present on two secondary amino groups of the melamine derivative, the organic moieties R being identical to or different from one another, and at least one organic moiety R being a C₁-C₂₀-alkyl, a C₅-C₃₀-cycloalkyl, a C₆-C₂₄-aryl and/or a C₇-C₃₀-arylalkyl moiety,
with formaldehyde in a solvent in a ratio of from 1:1 to 1:6, preferably from 1:1 to 1:3,
wherein the condensation products contain from 10 to 99% of melamine derivatives in which four of the total of six hydrogen atoms of the three amino groups of the melamine are substituted by organic moieties R.

6. The process as claimed in claim 5, **characterized in that** water is used as solvent.

7. The process as claimed in claim 5 or 6, **characterized in that** the reaction is effected in an alkaline medium.

8. The process as claimed in one of the claims 5 to 7, **characterized in that** at least one organic moiety R is a methyl, ethyl, propyl, isopropyl or benzyl moiety.

9. The process as claimed in at least one of claims 5 to 8, **characterized in that** the melamine-formaldehyde condensation products is etherified under acidic catalysis with alcohols, preferably methanol, ethanol, propanol, isopropanol, butanol, cyclohexanol, phenol, benzyl alcohol, monoalkyl ethers of ethylene glycol or propylene glycol or mixtures.

10. The use of melamine-formaldehyde condensation products as claimed in one of claims 1 to 5 as binders in laminates and/or composite materials.

11. The use of melamine-formaldehyde condensation products as claimed in any of claims 1 to 5 as a constituent of lacquers.

## Revendications

1. Produits de condensation de formaldéhyde ayant des propriétés thermoplastiques,
pouvant être fabriqués
par une réaction de formaldéhyde avec des dérivés de mélamine, quatre des six atomes d'hydrogène des trois groupes amino de la mélamine étant remplacés par des radicaux organiques R dans au moins un des dérivés de mélamine avant la réaction avec le formaldéhyde, de sorte que des atomes d'hydrogène libres soient présents sur deux groupes amino secondaires du dérivé de mélamine, les radicaux organiques R étant identiques ou différents les uns des autres et au moins un radical organique R étant un radical alkyle en C₁-C₂₀, cycloalkyle en C₅-C₃₀, aryle en C₆-C₂₄ et/ou arylalkyle en C₇-C₃₀, les produits de condensation contenant 10 à 99 % de dérivés de mélamine dans lesquels quatre des six atomes d'hydrogène des trois groupes amino de la mélamine sont remplacés par des radicaux organiques R.

2. Produits de condensation de formaldéhyde selon au moins l'une quelconque des revendications précédentes, **caractérisés en ce qu'**au moins un radical organique R est un radical éthyle, propyle, isopropyle, benzyle et/ou méthyle.

3. Produits de condensation de formaldéhyde selon au moins l'une quelconque des revendications précédentes, **caractérisés par** une plage de fusion comprise entre 70 et 130 °C.

4. Produits de condensation de formaldéhyde selon au moins l'une quelconque des revendications précédentes, **caractérisés en ce que** les groupes méthylol formés par la réaction de formaldéhyde avec les dérivés de mélamine se présentent partiellement ou entièrement sous forme éthérifiée.

5. Procédé de fabrication de produits de condensation de formaldéhyde selon au moins l'une quelconque des revendications 1 à 4,
**caractérisé par**
la réaction de
dérivés de mélamine, quatre des six atomes d'hydrogène des trois groupes amino de la mélamine étant remplacés par des radicaux organiques R dans les dérivés de mélamine, de sorte que des atomes d'hydrogène libres soient présents sur deux groupes amino secondaires du dérivé de mélamine, les radicaux organiques R étant identiques ou différents les uns des autres et au moins un radical organique R étant un radical alkyle en C₁-C₂₀, cycloalkyle en C₅-C₃₀, aryle en C₆-C₂₄ et/ou arylalkyle en C₇-C₃₀,
avec du formaldéhyde dans un solvant, en un rapport de 1:1 à 1:6, de préférence de 1:1 à 1:3,
les produits de condensation contenant 10 à 99 % de dérivés de mélamine dans lesquels quatre des six atomes d'hydrogène des trois groupes amino de la mélamine sont remplacés par des radicaux organiques R.

6. Procédé selon la revendication 5, **caractérisé en ce que** l'eau est utilisée en tant que solvant.

7. Procédé selon la revendication 5 ou 6, **caractérisée en ce que** la réaction a lieu dans un milieu alcalin.

8. Procédé selon l'une quelconque des revendications 5 à 7, **caractérisé en ce qu'**au moins un radical organique R est un radical méthyle, éthyle, propyle, isopropyle ou benzyle.

9. Procédé selon au moins l'une quelconque des revendications 5 à 8, **caractérisé en ce que** les produits de condensation mélamine-formaldéhyde sont éthérifiés sous catalyse acide avec des alcools, de préférence du méthanol, de l'éthanol, du propanol, de l'isopropanol, du butanol, du cyclohexanol, du phénol, de l'alcool benzylique, des éthers monoalkyliques d'éthylène ou de propylène glycol ou des mélanges.

10. Utilisation de produits de condensation mélamine-formaldéhyde selon l'une quelconque des revendications 1 à 5 en tant que liant dans des stratifiés et/ou des matériaux composites.

11. Utilisation de produits de condensation mélamine-formaldéhyde selon l'une quelconque des revendications 1 à 5 en tant que constituant de vernis.
